(19) Europäisches Patentamt

**European Patent Office**

Office européen des brevets

(11) Numéro de publication: **0 038 240**
**B1**

(12) **FASCICULE DE BREVET EUROPEEN**

(45) Date de publication du fascicule du brevet:
**14.03.84**

(21) Numéro de dépôt: **81400496.6**

(22) Date de dépôt: **27.03.81**

(51) Int. Cl.³: **H 02 M 3/315,** H 02 M 7/10

(54) **Alimentation continue et son utilisation pour alimenter un tube cathodique.**

(30) Priorité: **14.04.80 FR 8008273**

(43) Date de publication de la demande:
**21.10.81 Bulletin 81/42**

(45) Mention de la délivrance du brevet:
**14.03.84 Bulletin 84/11**

(84) Etats contractants désignés:
**DE GB IT SE**

(56) Documents cités:
**DE - A - 2 263 101**

**ELECTRONICS, vol. 43, no. 14, 6 juillet 1970, New York, US, J. KOTAS: "IC oscillation sets up a mini-sized bias supply", page 76**

(73) Titulaire: **THOMSON-CSF, 173, Boulevard Haussmann, F-75379 Paris Cedex 08 (FR)**

(72) Inventeur: **Guillon, Jean-Pierre, THOMSON-CSF SCPI 173, bld Haussmann, F-75360 Paris Cedex 08 (FR)**

(74) Mandataire: **Trocellier, Roger et al, THOMSON-CSF SCPI 173, Bld Haussmann, F-75379 Paris Cedex 08 (FR)**

## Alimentation continue et son utilisation
## pour alimenter un tube cathodique

La présente invention concerne une alimentation continue susceptible de délivrer plusieurs tensions continues stabilisées et ajustables séparément. Son application est en particulier envisagée pour l'alimentation d'un tube à rayons cathodiques, lequel nécessite diverses tensions continues régulées comportant, outre la très haute tension (THT), des hautes et basses tensions (HT et BT).

Une alimentation continue de ce genre nécessite en général autant de circuits régulateurs qu'il y a de sorties basse tension et autant de circuits convertisseurs que de sorties haute tension et très haute tension. Il en résulte une réalisation volumineuse et onéreuse.

Il est connu du document DE-A-2 263 101 d'utiliser pour la génération de la très haute tension un multiplicateur de tension et de prélever une tension plus basse à un point intermédiaire du multiplicateur en utilisant des diviseurs de tension ohmiques.

Un objet de l'invention est de perfectionner une telle alimentation en procurant une forte compacité et une grande économie de composants.

Suivant la présente invention, l'alimentation continue est du type multiplicateur de tension, comportant, une pluralité 2n de condensateurs et une pluralité 2n de redresseurs pour fournir n étages doubleurs de tension montés en cascade et délivrer une première tension continue de valeur sensiblement égale à 2n fois la valeur crête d'une tension alternative appliquée à l'entrée, des moyens de régulation et de réglage de la première tension produite entre la borne de sortie du dernier étage et une borne connectée au potentiel de référence, et au moins un circuit générateur d'une deuxième tension continue stabilisée, ce circuit générateur étant formé d'une première capacité connectée par une première extrémité au point de raccordement des deux redresseurs d'un étage doubleur, de préférence le premier étage, et par sa deuxième extrémité respectivement à l'entrée d'un premier redresseur et à la sortie d'un deuxième redresseur, ces premier et deuxième redresseurs étant connectés par leur autre extrémité au potentiel de référence, cette connection s'effectuant pour l'un d'eux à travers une résistance montée en parallèle avec une deuxième capacité, la deuxième tension étant prélevée aux bornes de la deuxième capacité.

Les particularités énoncées dans les revendications dépendantes et les avantages de la présente invention apparaîtront dans la description qui suit à l'aide des figures annexées qui représentent:

Fig. 1: un exemple de réalisation d'une alimentation continue conforme à l'invention;

Fig. 2: le signal d'entrée des générateurs BT et HT de l'alimentation continue selon la Fig. 1.

L'alimentation continue comporte des moyens générateurs d'une première tension continue régulée, ces moyens étant aménagés conformément à l'invention avec des moyens générateurs complémentaires pour produire d'autres tensions continues, également régulées.

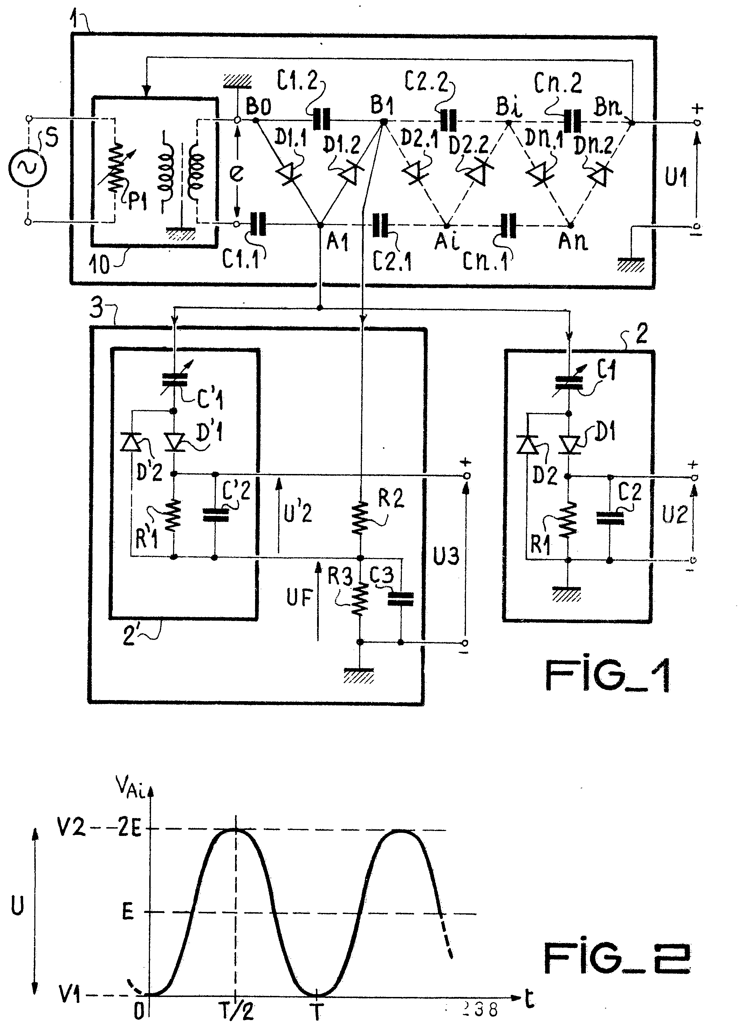

Suivant la Fig. 1, ces moyens générateurs correspondent aux blocs 1, 2, 3 pour produire respectivement la première tension U1 et deux autres tensions U2 et U3.

Les premiers moyens générateurs 1 forment une alimentation continue stabilisée, alimentée à partir d'une source alternative locale auxiliaire S, basse tension; cette alimentation 1 comporte une boucle de régulation de la tension U1 de sortie, les moyens de régulation étant considérés inclus dans le bloc 10 et réalisés selon des techniques connues. On considère également inclus en 10 un moyen de réglage dans une plage donnée de l'amplitude de la tension U1, ce moyen étant symbolisé par un potentiomètre P1 pouvant agir sur l'amplitude du signal alternatif d'entrée.

Les moyens complémentaires tels que 2 et 3 sont alimentés également à partir d'un signal alternatif (Fig. 2) prélevé dans l'alimentation 1, variant entre deux potentiels V1 et V2 avec une amplitude de variation U régulée par le circuit 10.

Ce signal alternatif d'alimentation est fourni par une alimentation 1 du type multiplicateur de tension représentée sur la Fig. 1. Le montage multiplicateur, connu en soi, comporte 2n condensateurs (C1.1 à Cn.1 et C1.2 à Cn.2) et 2n redresseurs (D1.1 à Dn.1 et D1.2 à Dn.2) formant n étages doubleurs d tension connectés en cascade. La haute tension continue U1 est prélevée aux extrémités de la branche C1.2 à Cn.2 de condensateurs et a pour valeur sensiblement 2n fois la valeur de la tension crête E du signal alternatif e à l'entrée du montage fourni par l'intermédiaire du circuit 10; l'une des bornes d'entré B0 est commune avec la sortie et connectée au potentiel masse de référence.

L'élément C1.1 se charge à la valeur crête E tandis que tous les autres éléments Ci.1 et Ci.2 se chargent à la valeur 2E. Chaque étage doubleur Ci.1, Di.1, Ci.2 et Di.2, présente deux bornes terminales Ai et Bi. La tension en Ai varie entre $(i-1)$. 2E et i.2E, ce dernier potentiel correspondant à celui régulé présent à l'extrémité Bi. C'est ce signal VAi qui est utilisé pour alimenter les moyens complémentaires 2 et 3. On se rend aisément compte, pour des questions d'isolement des éléments entrant dans la composition des circuits 2 et 3, qu'il est préférable de prélever le signal VAi sur le premier étage doubleur, c'est-à-dire, entre A1 et la masse. Le signal VA1 correspondant, représenté sur la Fig. 2, varie alors entre $V1 = 0$ et $V2 = VB1 = 2E$.

Les moyens complémentaires comportant au moins un circuit générateur d'une deuxième tension continue représenté en 2 sur la figure et qui est formé d'une première capacité C1 connecté par une extrémité au point Ai de raccordement des deux redresseurs Di.1 et Di.2 d'un étage doubleur, de préférence le premier étage, et par son autre extrémité respectivement à l'entrée d'un premier redresseur D1 et à la sortie d'un deuxième redresseur D2. La sortie du premier redresseur est connectée à la masse à travers une résistance R1. Une capacité de filtrage C2 est connectée en parallèle sur la résistance R1 et délivre à ses bornes la deuxième tension U2. Le deuxième élément redresseur D2 est connecté à la masse par son entrée.

Le fonctionnement peut être exprimé de manière simplifiée comme suit: lorsque le signal d'entrée décroît de V2 à V1, l'élément C1 se décharge à travers D2 jusqu'au potentiel V1, puis lorsque le signal croît de V1 à V2 le courant de charge de C1 passe dans la résistance R1 à travers D1. La tension U2 obtenue aux bornes de R1 est filtrée par C2. La charge $Q$ prise par C1 à chaque période T est donnée par $Q = C1 \, (U-U2)$, quantité d'électricité qui est égale au produit du courant moyen traversant R1 par la periode, soit:

$$\bar{i}T = C1 \, (U-U2) = \frac{\bar{i}}{F}$$

F désignant la fréquence. Etant donné que:

$$\bar{i} = \frac{U2}{R1}$$

on obtient la relation:

$$U2 = \frac{C1 \cdot R1 \cdot F}{1 + C1 \cdot R1 \cdot F} \cdot U$$

dans laquelle U est régulé et égale à 2E, F est imposé par la source S. La variation de U2 peut donc être obtenue en agissant sur C1 ou R1.

Le réglage de U2 par variation de R1 est moins intéressant que celui par variation de C1. Un potentiomètre monté en rhéostat présente une stabilité en fonction de la température qui s'avère le plus souvent insuffisante pour les performances exigées. Si l'on utilise des résistances à haute stabilité, le réglage nécessitera un stock de valeurs distinctes d'autant plus élevé que la précision de réglage requise sera élevée.

A contrario, l'utilisation d'un condensateur variable C1 comme figuré, présente une bonne tenue en température et une grande souplesse d'emploi. On peut utiliser un condensateur ajustable à diélectrique quartz par exemple qui présente un faible encombrement, une excellente stabilité en température et qui supporte des tensions pouvant être élevées (de l'ordre de 5 KV permanents). En outre aucun stock de composants n'est à prévoir pour assurer le réglage.

Un autre avantage présenté par le circuit générateur 2 est la sécurité assurée automatiquement en cas de court-circuit entre les bornes de sortie. En effet, le courant moyen a pour valeur $\bar{i}=F\,C1\,(U-U2)$ et en cas de court-circuit U2=0,

et l'on obtient $\bar{i}CC = F\,C1\,U$, la valeur maximale de ce courant de court-circuit $\bar{i}CC$ étant produite pour C1 ajusté à sa valeur maximale. Les composants sont prévus en conséquence.

Il est entendu par redresseurs toute forme de dispositifs assumant cette fonction, plus particulièrement, la forme usuelle la plus fréquente de diodes en circuits solides.

Il y a lieu de remarquer que l'inversion des sens des redresseurs D1 et D2 suffit pour inverser la polarité de la tension U2 fournie. Dans ce concept, le fonctionnement à la charge et à la décharge de C1 est également inversé.

La relation linéaire liant U2 à U montre que la deuxième tension produite est inférieure à la valeur U = 2E de ce montage. Si l'on considère dans un exemple de réalisation que U1 est une très haute tension réglable entre 17 et 19 KV par action de P1 et pouvant être obtenu avec n = 6 étages doubleurs à partir d'une tension crête E de l'ordre de 1,5 KV, le circuit générateur 2 produira une basse tension U2 inférieure à cette dernière valeur, dépendant des valeurs choisies pour R1 et C1 et réglable par action du condensateur variable C1 dans une plage envisagée, entre 150 V et 600 V par exemple.

Il peut être prévu plusieurs agencements, tel que le circuit 2, pour produire plusieurs basses tensions continues variables dans des plages distinctes, ceci par le choix des valeurs différentes des éléments R1, C1. Ces sorties basses tensions peuvent être toutes disponibles, ou une seule à la fois moyennant mise en place d'un circuit de commutation, la version retenue repondant aux besoins de l'exploitation.

Il est maintenant considéré une variante de réalisation du circuit générateur 2 en sorte d'accroître la valeur de la tension continue produite qui peut être rendue notamment supérieure à la valeur U = 2E. Ceci permet d'obtenir une (ou plusieurs) sortie haute tension réglable pour l'alimentation, par exemple entre 2,5 et 4,5 KV. Le procédé consiste à reprendre le montage du circuit 2 comme figuré en 2' sur la fig. 1 et à y adjoindre un circuit complémentaire permettant de produire une tension continue fixe UF qui se rajoute à la tension réglable U'2 prelevée sur la capacité C'2. Cette tension fixe est produite aisément par un pont diviseur R3, R2 entre la masse et la sortie régulée B1 de l'étage alimentant le circuit générateur 3 ainsi formé. La tension en B1 étant de 3 KV on peut produire ainsi par exemple une tension UF de 2 KV. Cette tension est stabilisée par le condensateur C3 en parallèle sur la résistance R3. Les éléments D'2, R'1, C'2 du circuit 2' sont connectés indirectement à la masse, à travers l'ensemble R3—C3, en sorte que la tension de sortie U3 résulte de la somme U'2 et UF. La valeur R'1 est choisie par exemple plus grande que R1 pour obtenir U'2 variant entre 500 V et 2,5 KV. Comme indiqué précédemment plusieurs circuits tel que 3 peuvent être prévus pour fournir diverses hautes tensions U3, éventuellement commutables.

Quelle que soit les solutions retenues 2 et/ou 3, pour les circuits générateurs des tensions complémentaires U2 et U3 nécéssaires pour l'exploitation, il convient de remarquer que la régulation de l'alimentation 1 profite aux divers circuits générateurs 2, 3 entraînant les régulations des sorties U2 et U3. La stabilité des ces tensions complémentaires est également liée à celle des autres paramètres F, R1 et C1; pour ces derniers l'expérience autant que les données de constructeurs conseillent un condensateur variable à quartz pour C1, la résistance R1 sera choisie de haute stabilité, la contrainte pour F exclue pratiquement les convertisseurs auto-oscillateurs dont la fréquence varie en fonction des conditions telle que la charge ou la température.

Une alimentation continue conforme à l'invention, se prête bien à une réalisation compacte et économique, ainsi qu'à l'alimentation d'un tube à rayons cathodiques; en conséquence, elle présente un indéniable intérêt pour équiper notamment des systèmes indicateurs de navigation aéroportés munie de visualisateurs cathodiques.

L'invention a été décrite plus précisément dans le sens d'une telle application à l'aide de la fig. 1. Il reste entendu que ce concept n'est pas limitatif, les conditions pour l'alimentation 1 d'origine étant de pouvoir présenter diverses bornes telles Ai pour prélever un signal alternatif variant entre deux potentiels V1 et V2 dont la différence U est stabilisée par la régulation. Le signal alternatif est à considérer dans un sens large, sinusoïdal ou autre, formé d'impulsions rectangulaires par exemple. Les potentiels V1 et V2 sont déterminés vis-à-vis du potentiel masse. Le potentiel V1 appelé potentiel de référence peut correspondre à ce potentiel zéro mais ceci n'est pas une obligation pour le fonctionnement.

En complément aux avantages précédemment rapportés et qui résultent d'un faible nombre de composants, il y a lieu de rajouter corrélativement une réduction de la consommation électrique.

**Revendications**

1. Alimentation continue du type multiplicateur de tension comportant une pluralité 2n de condensateurs (Ci.1, Ci.2) et une pluralité 2n de redresseurs (Di.1, Di.2) pour fournir n étages doubleurs de tension montés en cascade et délivrer une première tension continue (U1) de valeur sensiblement égale à 2n fois la valeur crête (E) d'une tension alternative (e) appliquée à l'entrée, des moyens de régulation et de réglage (10) de la première tension produite entre 1a borne de sortie (Bn) du dernier étage et une borne (Bo) connectée à un potentiel de référence et au moins un circuit générateur (2) d'une deuxième tension continue stabilisée (U2) raccordé à un point intermédiaire du multiplicateur, caractérisée en ce que ce circuit générateur est formé d'une première capacité (C1) connectée par une première extrémité au point de raccordement (Ai) des deux redresseurs d'un étage doubleur et par sa deuxième extrémité respectivement à l'entrée d'un premier redresseur et à la sortie d'un deuxième redresseur, ces premier et deuxième redresseurs (D1 et D2) étant connectés par leur autre extrémité au potentiel de référence, cette connection s'effectuant pour l'un d'eux à travers une résistance (R1) montée en parallèle avec une deuxième capacité (C2), la deuxième tension étant prélevée aux bornes de la deuxième capacité.

2. Alimentation continue selon la revendication 1, caractérisée en ce que ledit circuit générateur comporte des moyens de réglage de la deuxième tension continue.

3. Alimentation continue selon la revendication 2, caractérisée en ce que les moyens de réglage sont constitués par la première capacité (C1) formée par un condensateur ajustable.

4. Alimentation continue selon l'une quelconque des revendications 1 à 3, caractérisée en ce que la première capacité est connectée par sa première extrêmité audit point de raccordement (A1) du premier étage doubleur (C1.1, D1.1, C1.2, D1.2).

5. Alimentation continue selon l'une quelconque des revendications 1 à 4, caractérisée en ce qu'elle comporte au moins un desdits circuits générateurs (3) aménagé pour produire une source de tension continue fixe (UF) interposée sur ladite connexion des redresseurs (D'1, D'2) au potentiel de référence, et modifier la tension continue complémentaire.

6. Alimentation continue selon la revendication 5, caractérisée en ce que la source continue fixe est produite par un pont diviseur à résistances, connecté entre la borne de sortie (Bi) de l'étage doubleur alimentant la première capacité et le potentiel de référence, le pont comportant au moins deux éléments résistifs (R2, R3) dont l'un se trouve interposé sur ladite connexion des redresseurs au potentiel de référence et comporte en parallèle une troisième capacité (C3).

7. Alimentation continue selon la revendication 5 ou 6 pour alimenter un tube à rayons cathodiques, caractérisée en ce que le montage multiplicateur de tension délivre une très haute tension (U1) régulée et qu'elle comporte au moins deux circuits générateurs (2, 3) dont l'un aménagé pour produire au moins deux tensions continues régulées complémentaires sous forme respectivement d'une basse tension (U2) et d'une haute tension (U3).

8. Utilisation d'une alimentation selon l'une quelconque des revendications 1 à 6 pour alimenter un tube à rayons cathodiques, caractérisée en ce que le tube reçoit une très haute tension d'alimentation du montage multiplicateur (1) et au moins une tension continue régulée complémentaire d'un desdits circuits générateurs (2, 3).

9. Utilisation d'une alimentation selon l'ensemble des revendications 7 et 8, caractérisée en ce que le tube reçoit au moins deux tensions continues régulées complémentaires provenant respectivement d'un circuit générateur basse tension (2) et d'un circuit générateur haute tension (3).

**Patentansprüche**

1. Gleichstromversorgung vom Typ eines Spannungsvervielfachers, mit einer Mehrzahl von 2n Kondensatoren (Ci1, Ci2) und einer Mehrzahl von 2n Gleichrichtern (Di1, Di2) zur Bildung von n in Kaskade geschalteten Spannungsverdopplerstufen und Abgabe einer ersten Gleichspannung (U1), deren Wert ungefähr gleich dem 2n-fachen des Spitzenwertes (E) einer Wechselspannung (e) beträgt, die an den Eingang angelegt ist, mit einer Einrichtung (10) zum Regeln und Einstellen der ersten Spannung, die zwischen dem Ausgangsanschluß (Bn) der letzten Stufe und einem Anschluß (Bo) erzeugt wird, welcher an ein Bezugspotential angeschlossen ist, und mit wenigstens einer Generatorschaltung (2) zur Erzeugung einer zweiten stabilisierten Gleichspannung (U2) und welcher an einen Zwischenpunkt des Vervielfachers angeschlossen ist, dadurch gekennzeichnet, daß die Generatorschaltung gebildet ist aus einer ersten Kapazität (C1), welche an ihrem ersten Ende mit dem Anschlußpunkt (Ai) der beiden Gleichrichter einer Verdopplerstufe und an ihrem zweiten Ende mit dem Eingang eines ersten Gleichrichters bzw. mit dem Ausgang eines zweiten Gleichrichters verbunden ist, wobei dieser erste und zweite Gleichrichter (D1 und D2) an ihrem anderen Ende mit dem Bezugspotential verbunden sind und wobei diese Verbindung für einen von ihnen über einen Widerstand (R1) erfolgt, welcher parallel zu einer zweiten Kapazität (C2) geschaltet ist, während die zweite Spannung an den Anschlüssen der zweiten Kapazität abgegriffen wird.

2. Gleichstromversorgung nach Anspruch 1, dadurch gekennzeichnet, daß die Generatorschaltung Mittel zum Einstellen der zweiten Gleichspannung umfaßt.

3. Gleichstromversorgung nach Anspruch 2, dadurch gekennzeichnet, daß die Einstellmittel aus der ersten Kapazität (T1) gebildet sind, welche durch einen einstellbaren Kondensator gebildet ist.

4. Gleichstromversorgung nach einem der Ansprüche 1 bis 3, dadurch gekennzeichnet, daß die erste Kapazität an ihrem ersten Ende mit dem Anschlußpunkt (A1) der ersten Verdopplerstufe (C1.1, D1.1, C1.2, D1.2) verbunden ist.

5. Gleichstromversorgung nach einem der Ansprüche 1 bis 4, dadurch gekennzeichnet, daß sie wenigstens eine der genannten Generatorschaltungen (3) enthält, die so ausgebildet ist, daß sie eine Quelle (UF) für eine feste Gleichspannung erzeugt, die in die genannte Verbindung der Gleichrichter (D'1, D'2) mit dem Bezugspotential eingefügt ist, und um die komplementäre Gleichspannung verändern.

6. Gleichstromversorgung nach Anspruch 5, dadurch gekennzeichnet, daß die Quelle einer festen Gleichspannung durch eine Teilerbrücke aus Widerständen gebildet ist, welche zwischen den Ausgangsanschluß (Bi) der die erste Kapazität speisenden Verdopplerstufe und das Bezugspotential eingefügt ist, wobei die Brücke wenigstens zwei resistive Elemente (R2, R3) enthält, von denen eines in die genannte Verbindung der Gleichrichter mit dem Bezugspotential eingefügt ist und parallel geschaltet eine dritte Kapazität (C3) enthält.

7. Gleichstromversorgung nach Anspruch 5 oder 6 zur Versorgung einer Kathodenstrahlröhre, dadurch gekennzeichnet, daß die Spannungsvervielfacherschaltung eine sehr hohe stabilisierte Spannung (U1) abgibt und wenigstens zwei Generatorschaltungen (2, 3) umfaßt, von denen eine so ausgebildet ist, daß sie wenigstens zwei komplementäre stabilisierte Gleichspannungen erzeugt von denen die eine eine niedrige Spannung (U2) und die andere eine hohe Spannung (U3) ist.

8. Verwendung einer Stromversorgung nach einem der Ansprüche 1 bis 6 zur Speisung einer Kathodenstrahlröhre, dadurch gekennzeichnet, daß die Röhre eine sehr hohe Versorgungsspannung aus der Vervielfacherschaltung (1) und wenigstens eine stabilisierte komplementäre Gleichspannung aus einer der Generatorschaltungen (2, 3) erhält.

9. Verwendung einer Stromversorgung nach den beiden Ansprüchen 7 und 8, dadurch gekennzeichnet, daß die Röhre wenigstens zwei stabilisierte komplementäre Gleichspannungen empfängt, von denen die erste aus einer Niederspannung-Generatorschaltung (2) und die zweite aus einer Hochspannungs-Generatorschaltung (3) stammt.

**Claims**

1. Direct supply of the voltage multiplier type comprising a plurality of 2n capacitors (Ci1, Ci2) and a plurality of 2n rectifiers (Di1, Di2) for providing n voltage doubling stages connected in cascade and furnishing a first direct voltage (U1) of value substantially equal to 2n times the crest value (E) of an alternating voltage (e) applied to the input, means (10) for controlling and adjusting the first voltage produced between the output terminal (Bn) of the last stage and a terminal (Bo) connected to a reference potential, and at least one generator circuit (2) for generating a second controlled direct voltage (U2), which is connected to an intermediate point of the multiplier, characterized in that the generator circuit is formed by a first capacitance (C1) connected at a first end to the connection point (Ai) of the two rectifiers of a doubling stage and at its second end respectively to the input of a first rectifier and to the output of a second rectifier, said first and second rectifiers (D1 and D2) being connected at their other end to the reference potential, said connection being effected for one of them via a resistor (R1) connected in parallel with a second capacitance (C2), the second voltage being taken from the terminals of the second capacitance.

2. Direct supply according to Claim 1, characterized in that said generator circuit comprises means for adjusting the second direct voltage.

3. Direct supply according to Claim 2, characterized in that the adjusting means are constituted by the first capacitance (T1) formed by an adjustable capacitor.

4. Direct supply according to any one of Claims 1 to 3, characterized in that the first capacitance is connected at its first end to said connection point (A1) of the first doubling stage (C1.1, D1.1, C1.2, D1.2).

5. Direct supply according to any one of claims 1 to 4, characterized in that it comprises at least one of said generator circuits (3) which is adapted to produce a source (UF) of fixed direct voltage interposed in said connection of the rectifiers (D'1, D'2) to the reference potential, and to modify the complementary direct voltage.

6. Direct supply according to Claim 5, characterized in that the fixed direct source is produced by a divider bridge of resistances connected between the output terminal (Bi) of the doubling stage feeding the first capacitance and the reference potential, the bridge comprising at least two resistive elements (R2, R3), one of which is interposed in said connection of the rectifiers to the reference potential and comprises a third capacitance (C3) in parallel.

7. Direct supply according to Claim 5 or 6 for supplying a cathode ray tube, characterized in that the voltage multiplier circuit furnishes a very high controlled voltage (U1) and that it comprises at least two generator circuits (2, 3) one of which is adapted to produce at least two controlled complementary direct voltages in the form respectively of a low voltage (U2) and a high voltage (U3).

8. Use of a supply according to any one of Claims 1 to 6 for supplying a cathode ray tube, characterized in that the tube receives a very high supply voltage from the multiplier circuit (1) and at least one controlled complementary direct voltage from one of said generator circuits (2, 3).

9. Use of a supply according to a combination of Claims 7 and 8, characterized in that the tube receives at least two controlled complementary direct voltages coming respectively from a low voltage generator circuit (2) and a high voltage generator circuit (3).

0 038 240

FIG_1

FIG_2

238

7